# DEMANDE DE BREVET EUROPEEN

(11) **EP 1 495 674 A1**
(43) Date de publication de la demande: **12.01.2005**
(21) Numéro de dépôt: 03405517.8
(22) Date de dépôt: 10.07.2003
(51) Int. Cl.: A01K 25/00

(54) **Muselière**

(71) Demandeur: Haute Ecole d'Arts Appliqués, 2300 La Chaux-de-Fonds (CH)
(72) Inventeur: Steunou, Alexia, 2300 La Chaux-de-Fonds (CH)
(74) Mandataire: Gresset, Jean

(57) **Abrégé**

L'invention concerne une muselière (12) comportant un organe de contrainte (14) destiné à entourer la gueule d'un l'animal (10) pour empêcher son ouverture et des moyens de maintien (20, 22) de l'organe sur la tête. Elle est caractérisée en ce que ledit organe (14) est agencé de manière à ce qu'il s'ouvre élastiquement tant qu'il est soumis à une force inférieure à une valeur limite, et qu'il se bloque si cette force est dépassée.

## Description

La présente invention se rapporte aux muselières, notamment utilisées pour empêcher les chiens de mordre. Il est bien connu que, dans certaines circonstances, les chiens peuvent devenir agressifs. La muselière permet d'éviter que cette agressivité s'exprime par une morsure.

Les muselières traditionnelles manquent totalement de confort pour l'animal. Elles l'empêchent notamment de boire, de manger ou encore de haleter, ce qui est important en cas d'effort, spécialement pour permettre la régulation thermique.

Pour pallier cet inconvénient, le document FR 2810503 propose d'associer la muselière à la laisse, de manière telle que, tant que l'animal présente un comportement normal, il peut ouvrir sa gueule sans difficulté. Par contre, dès qu'il présente un caractère agressif et tire sur sa laisse, la muselière enserre la mâchoire et empêche l'ouverture de la gueule.

Cette solution offre, certes, de nombreux avantages par rapport aux solutions connues. Elle est, toutefois, totalement inefficace si le maître lâche la laisse. Or, c'est bien dans ces circonstances que le risque d'accidents est le plus grand.

Le but de la présente invention est de proposer une muselière permettant à l'animal qui en est muni de pouvoir manger, boire et haleter en toute liberté, tout en l'empêchant de mordre.

Selon l'invention, la muselière comporte un organe de contrainte destiné à entourer la gueule de l'animal pour empêcher son ouverture et des moyens de maintien de l'organe sur la tête. Elle est caractérisée en ce que l'organe de contrainte est agencé de manière à ce qu'il s'ouvre élastiquement tant qu'il est soumis à une force inférieure à une valeur limite, et qu'il se bloque si cette force est dépassée.

Il a, en effet, été constaté que, lorsque le chien se met en position d'attaque, il a la gueule fermée, ne l'ouvrant brusquement que lorsqu'il s'apprête à mordre. Cette brusque ouverture engendre une force très nettement supérieure à celle appliquée lorsque l'animal boit ou halète. De la sorte, seul le comportement agressif de l'animal est empêché.

De manière avantageuse, l'organe de contrainte comporte une sangle, destinée à entourer la gueule de l'animal et un mécanisme de blocage coopérant avec la sangle et comprenant :
- une bobine munie d'un noyau sur lequel une extrémité de la sangle est fixée,
- un châssis sur lequel la bobine est montée mobile en rotation et sur lequel l'autre extrémité de la sangle est fixée.
- un ressort reliant la bobine au châssis et disposé de manière à ce que ladite sangle soit enroulée sur la bobine lorsque le ressort est désarmé, alors qu'il est armé lorsque la sangle est déroulée,
- un dispositif de détermination de la vitesse de rotation de la bobine, et
- un verrou coopérant avec le dispositif de détermination de la vitesse et agencé de manière à bloquer la bobine lorsque la vitesse dépasse une valeur limite correspondant à la force appliquée.

Le dispositif de détermination de la vitesse et le verrou peuvent être de type mécanique à inertie. Plus précisément, le dispositif de détermination de la vitesse comporte une pièce d'inertie positionnée élastiquement et montée pivotante sur la bobine autour d'un axe décalé par rapport à son centre de gravité. Le verrou comprend un encliquetage muni :
- d'une denture solidaire du châssis et
- d'un doigt que comporte la pièce d'inertie dans sa partie opposée à l'axe de pivotement en référence au centre de gravité, destiné à coopérer avec la denture.

De la sorte, le doigt peut se mouvoir librement en regard de la denture tant que la vitesse de rotation de la bobine est inférieure à une valeur limite. Il s'y engage, au contraire, dès que la vitesse dépasse cette limite et bloque ainsi la bobine.

En variante, le dispositif de détermination de la vitesse comprend un capteur électrique, alors que le verrou comporte un transducteur électromécanique et un loquet commandé par le transducteur, lequel coopère avec la bobine pour la bloquer lorsque la vitesse dépasse la valeur limite.

De manière avantageuse, le capteur comporte une génératrice munie d'un rotor et d'un stator, l'un comportant un aimant, l'autre un bobinage. Le rotor de la génératrice est monté rigidement sur la bobine. Le bobinage comporte deux bornes reliées aux bornes du transducteur. La génératrice et le transducteur sont agencés de manière à ce que le verrou soit activé chaque fois que la bobine dépasse sa vitesse limite de rotation.

D'autres avantages et caractéristiques de l'invention ressortiront de la description qui va suivre, faite en regard du dessin annexé, dans lequel:
- les figures 1a et 1b montrent un chien muni d'une muselière selon l'invention ;
- les figures 2 à 4 illustrent, en perspective, une partie de la muselière de la figure 1 ; et
- la figure 5 représente le schéma électrique d'une variante.

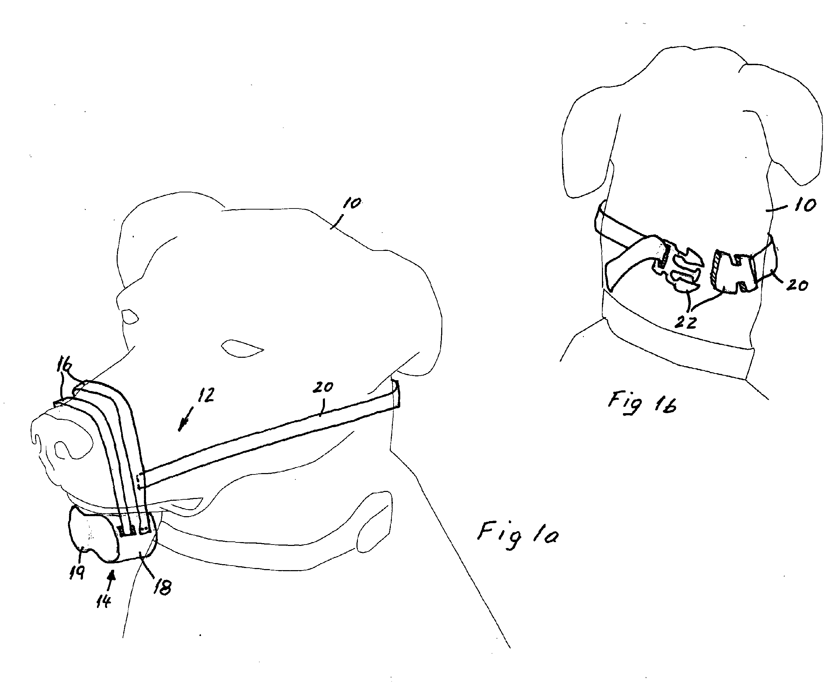

Les figures 1a et 1b représentent une tête de chien 10 munie d'une muselière 12 selon l'invention, respectivement vue de devant et de derrière.

La muselière 12 comporte un organe de contrainte 14 destiné à entourer la gueule de l'animal et comprenant deux sangles 16 et un mécanisme de blocage 18, muni d'une boîte 19 seule visible sur cette figure, auquel sont fixées les deux extrémités des sangles 16, et des moyens de maintien de l'organe 14 sur la tête 10, comportant un lacet 20 et un clip 22, ce dernier n'étant visible que sur la figure 1b.

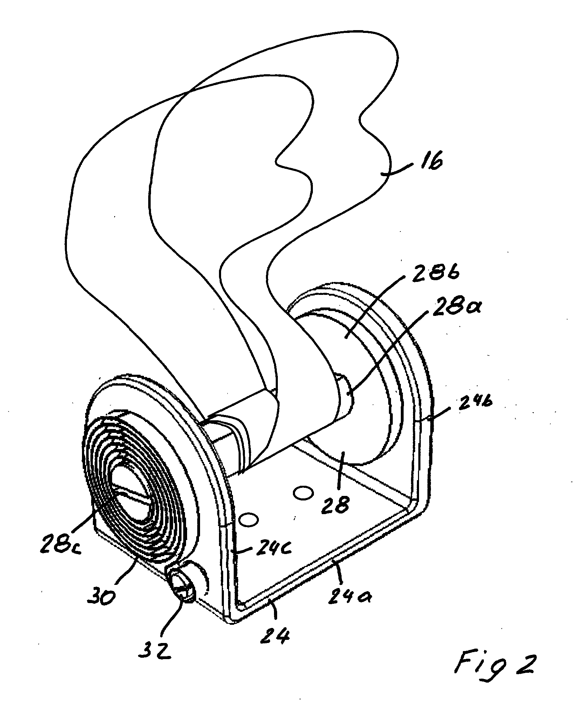

Le mécanisme 18, qui sera décrit de manière détaillée en référence aux figures 2 à 4, est agencé de manière à ce que, en l'absence de contrainte, les sangles 16 tendent à s'enrouler dans la boîte 19. De la sorte, pour mettre en place la muselière 12, il suffit de tirer sur ces sangles 16 pour former deux boucles adjacentes dans lesquelles est engagé le museau de l'animal, puis de passer le lacet 20 derrière les oreilles et de fermer le clip 22.

Les figures 2 à 4 représentent une partie du mécanisme 18, permettant d'assurer la fonction de blocage de l'une des sangles 16. L'autre partie est identique. C'est pourquoi elle n'a pas été représentée.

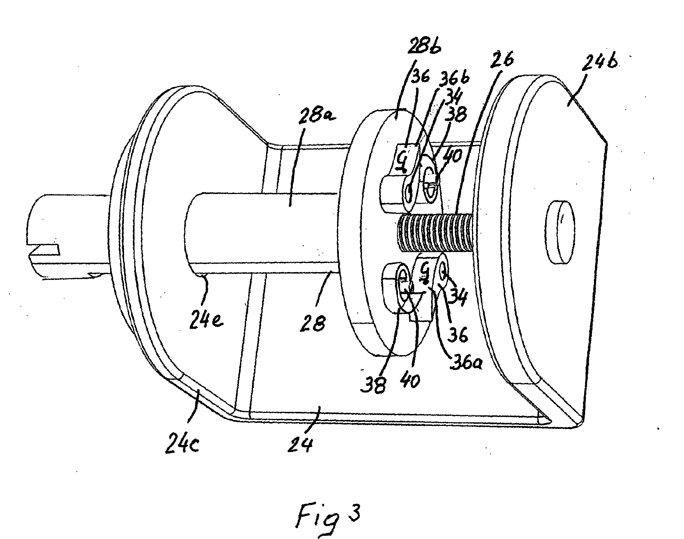

On peut voir sur ces figures un châssis 24 en U, doté d'une base 24a et de deux bras 24b et 24c parallèles entre eux et perpendiculaires à la base. Les bras 24b et 24c sont respectivement percés de trous coaxiaux 24d et 24e (figure 3). Dans le trou 24d , taraudé, est engagé un arbre 26 fileté, lequel porte une bobine 28 munie d'un noyau 28a engagé sur l'arbre 26 et d'un flasque 28b adjacent au bras 24b. Le noyau 28a est creux et engagé sur l'arbre 26. Il traverse le trou 24e de part en part et dépasse du bras 24c.

Un ressort spiral 30 est monté par son extrémité intérieure sur la partie du noyau 28a, par engagement dans une fente 28c (figure 2). Il est fixé par son extrémité extérieure sur la paroi extérieure du bras 24c, au moyen d'un plot à fente 32.

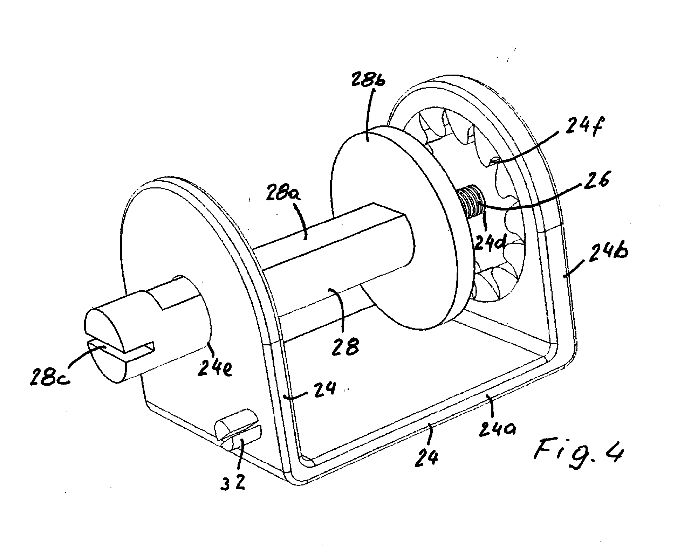

Comme on peut le voir sur la figure 4, le bras 24b est muni d'une denture intérieure 24f formée de dents de loup et qui s'étend du bord du bras 24b vers son centre, concentriquement à l'arbre 26 et du côté du flasque 28b.

Le flasque 28b porte deux plots 34, visibles sur la figure 3, chacun servant de support à un cliquet 36. Des ressorts-lame 38 sont fixés par l'une de leur extrémité au corps 36a du cliquet 36, par engagement dans une fente et par l'autre au flasque 28b au moyen d'un plot fendu 40. Les ressorts 38 sont avantageusement fixés par serrage dans l'une des fentes, à l'une ou l'autre de leurs extrémités.

Les cliquets 36 pivotent sur le flasque 28b autour d'un axe parallèle à l'axe de la bobine 28. Ils comportent un bec 36b, situé à l'extrémité du corps 36a et agencé de manière à coopérer avec la denture 24f, comme cela sera expliqué plus loin.

Les centres de gravité des cliquets 36, identifiés par la lettre G, se trouvent entre l'axe de pivotement et le bec 36b. Sans contrainte, les ressorts 38 positionnent les cliquets 36 de manière telle qu'ils peuvent passer librement en regard de la denture 24f. Si la bobine 28 tourne, la force centrifuge provoque le déplacement des becs 36b vers l'extérieur, le déplacement étant d'autant plus grand que la vitesse est élevée. Pour une valeur limite de la vitesse, les cliquets entrent en contact avec la denture, bloquant ainsi la bobine.

La sangle 16 est fixée par une extrémité au noyau 28a de la bobine 28 et par l'autre sur la base 24a du châssis 24 (figure 2). Le ressort 30 est agencé de manière à ce qu'il soit détendu lorsque la sangle est enroulée sur le noyau 28b.

Une traction exercée sur les sangles 16 les fait se dérouler de la bobine 28, la vitesse de rotation de la bobine 28 étant d'autant plus grande que la force exercée est grande. Cette traction permet l'extraction des sangles tant que la vitesse de rotation reste en-dessous de la valeur limite. Dès que cette valeur est dépassée, les becs 36b s'engagent dans la denture 24f pour s'y accrocher et bloquer la rotation, et donc l'extraction de la sangle 16. De la sorte, l'organe de contrainte 14 travaille de manière similaire aux ceintures de sécurité des voitures.

Pour mettre en place la muselière, il suffit de tendre lentement les sangles 16 de manière à les extraire de la boîte 19, formant ainsi deux boucles passées sur le museau de l'animal. Après avoir relâché les sangles 16, le lacet 20 est passé derrière les oreilles de l'animal. Il est maintenu en place en enfichant le clip 22. Le clip 22 est monté coulissant par l'une de ses parties sur le lacet 20, de manière à permettre sa mise de longueur.

On relèvera que la muselière pourrait aussi travailler avec une seule sangle et une seule bobine. Dans ce cas toutefois, la sangle doit glisser sur le museau de l'animal, ce qui risque de provoquer un déplacement du mécanisme 18. Il est aussi possible de prévoir un mécanisme 18 comportant deux bobines, les deux extrémités de la sangle 16 étant solidaires de l'une des bobines. La solution à choisir dépendra notamment des dimensions de l'animal.

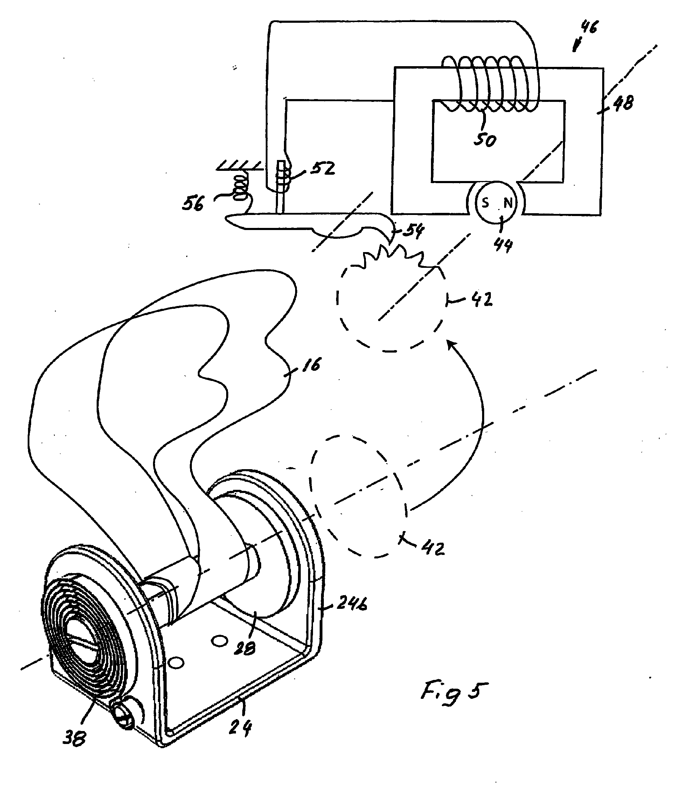

Dans la variante représentée schématiquement à la figure 5, on retrouve la sangle 16, le châssis 24, la bobine 28 et le ressort 38. Le noyau 28a de la bobine 28 se prolonge, comme indiqué schématiquement par un trait d'axe, également au-delà du bras 24a du châssis 24 et porte une roue à rochet 42 ainsi qu'un rotor 44. Le rotor 44 appartient à une génératrice 46 comportant en outre un stator 48 muni d'un bobinage 50. Un électro-aimant 52 et un cliquet 54 sont disposés au voisinage de la roue 42. L'électro-aimant 52 coopère avec un noyau magnétique que comporte le cliquet 54. Il est relié électriquement au bobinage 50 de la génératrice. Par ailleurs, un ressort 56 coopère avec le cliquet 54 de manière à le maintenir éloigné de la roue 42.

Tant que le signal aux bornes de l'électro-aimant engendre une force inférieure à celle du ressort 56, le cliquet reste dans sa position de repos. Dès que cette limite est dépassée, le cliquet bascule et s'engage dans la denture de la roue 42, bloquant ainsi la roue. De manière avantageuse, les dents de cette roue sont disposées de manière à ce que le cliquet 54 reste engagé dans la denture jusqu'à ce que la tension appliquée sur la sangle soit interrompue.

Le signal appliqué à l'électro-aimant 52 est obtenu par une traction sur la sangle 16, qui fait tourner la bobine 28, et avec elle le rotor 44, ce qui induit un signal dans le stator 48. Cela se produit lorsque l'animal tend à ouvrir brusquement la gueule.

Qu'il s'agisse du premier ou du deuxième mode de réalisation, la sangle dans son mouvement se bloque, empêchant l'ouverture de la gueule et en conséquence la morsure. L'ouverture lors du halètement ou lorsque l'animal boit n'a, par contre, aucun effet sur le mécanisme 18, n'affectant en conséquence aucunement ces mouvements.

Les deux modes de réalisation décrits peuvent encore faire l'objet de nombreuses variantes, sans pour autant sortir du cadre de l'invention. Il serait ainsi possible de développer un dispositif encore plus sensible, en faisant appel à de capteurs et une électronique de commande déterminant, en fonction du comportement de l'animal, quand l'organe de contrainte doit être bloqué.

Dans une autre variante, il est envisageable d'utiliser des matériaux dont le coefficient d'élasticité augmente brusquement lorsqu'ils sont soumis à une contrainte mécanique importante. Une matière plastique présentant une telle caractéristique est, par exemple, commercialisée par la maison Dupont de Nemour sous la marque Hytrel ®.

Ainsi, grâce aux caractéristiques que présentent les dispositifs décrits, il est possible de permettre la protection du public au moyen d'une muselière efficace, tout en garantissant un bon confort à l'animal qui la porte.

## Revendications

1. Muselière (12) comportant un organe de contrainte (14) destiné à entourer la gueule d'un l'animal (10) pour empêcher son ouverture et des moyens de maintien (20, 22) de l'organe sur la tête, **caractérisée en ce que** ledit organe (14) est agencé de manière à ce qu'il s'ouvre élastiquement tant qu'il est soumis à une force inférieure à une valeur limite, et qu'il se bloque si cette force est dépassée.

2. Muselière selon la revendication 1, **caractérisée en ce que** l'organe de contrainte (14) comporte une sangle (16) destinée à entourer la gueule de l'animal (10) et un mécanisme de blocage (18) coopérant avec la sangle (16) et comprenant :
• une bobine (28) munie d'un noyau (28a) sur lequel une extrémité de la sangle est fixée,
• un châssis (24) sur lequel la bobine (28) est montée mobile en rotation et l'autre extrémité de la sangle est fixée rigidement,
• un ressort (38) reliant la bobine (28) au châssis (24) et disposé de manière à ce que ladite sangle (16) soit enroulée sur la bobine (28) lorsque le ressort (38) est désarmé, alors qu'il est armé lorsque la sangle (16) est déroulée,
• un dispositif de détermination de la vitesse de rotation de la bobine, et
• un verrou coopérant avec le dispositif de détermination de la vitesse et agencé de manière à bloquer la bobine lorsque la vitesse dépasse sa valeur limite.

3. Muselière selon la revendication 2, **caractérisée en ce que** le dispositif de détermination de la vitesse et le verrou sont de type mécanique à inertie.

4. Muselière selon la revendication 3, **caractérisée en ce que** le dispositif de détermination de la vitesse comporte une pièce d'inertie (36, 38) positionnée élastiquement et montée pivotante sur la bobine autour d'un axe décalé par rapport à son centre de gravité (G), et le verrou comprend un encliquetage muni :
• d'une denture (24f) solidaire du châssis et
• d'un bec (36b) que comporte la pièce d'inertie (36) dans sa partie opposée à l'axe de pivotement en référence au centre de gravité (G), destiné à coopérer avec la denture (24f).

5. Muselière selon la revendication 2, **caractérisé en ce que** le dispositif de détermination de la vitesse comprend un capteur électrique et le verrou comporte un transducteur (52) électromécanique et un verrou (54) commandé par le transducteur (52) et coopérant avec la bobine (28) pour la bloquer lorsque la vitesse dépasse une valeur limite.

6. Muselière selon la revendication 5, **caractérisée en ce que** le capteur comporte une génératrice (46) munie d'un rotor (44) et d'un stator (48), l'un comportant un aimant, l'autre un bobinage, **en ce que** le rotor (44) est monté rigidement sur ladite bobine (28) et **en ce que** le bobinage (50) comporte deux bornes reliées aux bornes dudit transducteur (52), la génératrice et le transducteur étant agencés de manière à ce que ledit verrou soit activé chaque fois que la bobine dépasse une vitesse limite.

7. Muselière selon l'une des revendications 2 à 6, **caractérisée en ce qu'**elle comporte deux sangles (16) et deux mécanismes (18), chaque mécanisme coopérant avec l'une desdites sangles.
